# EUROPEAN PATENT APPLICATION

(11) **EP 3 176 995 A1**
(43) Date of publication of application: **07.06.2017**
(21) Application number: 16754158.0
(22) Date of filing: 04.07.2016
(51) Int. Cl.: H04L 29/08, H04N 21/436, G06F 17/30, G10L 13/00, H04L 29/06

(54) **METHOD, DEVICE, SERVER, AND SYSTEM FOR SYNCHRONIZING MEMBER BENEFITS AMONG MULTIPLE DEVICES**

(30) Priority: 22.10.2015 CN 201510694506
(71) Applicant: LE Holdings (Beijing) Co., Ltd., Beijing 100025 (CN); Le Shi Zhi Xin Electronic Technology (Tianjin) Limited, Tianjin 300467 (CN)
(72) Inventor: NIU, Yunfei, Binhai New Area Tianjin 300467 (CN)
(74) Representative: Bockhorni & Kollegen
(86) International application number: PCT/CN2016/088360
(87) International publication number: WO 2017/067218

(57) **Abstract**

The embodiments of the present disclosure disclose a method, a device, a server and a system for synchronizing member benefits among multiple devices. The method comprises: acquiring an identity of a device as a current device identity, and acquiring a member account logged on the device; sending a synchronization request regarding the current device identity and the member account to the server; and receiving a synchronization result returned by the server, the synchronization result being a result of synchronizing a member benefit and a corresponding member duration of the member account regarding a device identity to be synchronized with a member benefit and a corresponding member duration of the member account regarding the current device identity acquired by the server through querying, and the device identity to be synchronized being different from the current device identity. According to the embodiments of the present disclosure, the member benefits and the corresponding durations of the same account regarding different devices are searched through the server, and then synchronized, so that a function of sharing the member benefits of the same account among multiple devices is achieved.

## Description

### TECHNICAL FIELD

The disclosure relates to a field of mobile phone related technologies, and more particularly, to a method, a device, a server and a system for synchronizing member benefits among multiple devices.

### BACKGROUD

A smartphone refers to a mobile phone type, similar to a personal computer, which has an independent operating system and an independent running space, enables a user to independently install programs like software, game and navigation provided by third party service providers, and may access to a wireless network through a mobile communication network.

A smart TV is a smart multimedia terminal emerged by following a tendency of "high definition", "networking" and "intelligentization", which has functions of acquiring program contents from multiple channels like Internet, video devices, computers, or the like, and clearly displaying contents most needed by consumers on a screen through a simple and easy-to-use integrated operation interface.

The emergence of the smart TV greatly improves big-screen viewing experience, and the smart TV has become a home entertainment center. During viewing through a big screen, more and more users select a "second screen" like a mobile phone and a tablet simultaneously to search program related information, and participate in program interactions.

A member account is used for identifying users. A user can use the member account to acquire a member benefit regarding the member account through a smartphone or a smart TV. Usually, the member benefit will have a certain use duration, i.e., a member duration.

However, it is found by the inventor during the process of implementing the present disclosure that each member benefit is associated with only one device in the prior art, i.e., the member benefit cannot be shared among multiple devices.

### SUMMARY

On this basis, it is necessary to provide a method, a device, a server and a system for synchronizing member benefits among multiple devices to solve the technical problem of the prior art that cannot share the member benefit of the same member account among multiple devices.

One embodiment of the present disclosure provides a method for synchronizing member benefits among multiple devices, comprising:
acquiring an identity of a device as a current device identity, and acquiring a member account logged on the device;
sending a synchronization request regarding the current device identity and the member account to the server; and
receiving a synchronization result returned by the server, the synchronization result being a result of synchronizing a member benefit and a corresponding member duration of the member account regarding a device identity to be synchronized with a member benefit and a corresponding member duration of the member account regarding the current device identity acquired by the server through querying, and the device identity to be synchronized being different from the current device identity.

Further, the sending the synchronization request regarding the current device identity and the member account to the server specifically comprises:
sending a collection query request comprising the current device identity and the member account to the server;
acquiring at least one collection query result returned by the server, the collection query result being a member benefit and a corresponding member duration of the member account regarding a collectable device identity acquired by the server through querying, the collectable device identity being different from the current device identity, and each collection query result corresponding to one single collectable device identity; and
displaying the collection query result, and sending a synchronization request comprising a selected device identity to the server in response to a selecting operation on the collection query result, the selected device identity being the collectable device identity corresponding to the collection query result selected by the selecting operation, and the server being configured to use the selected device identity comprised in the synchronization request received as the device identity to be synchronized.

The embodiment of the present disclosure provides a computer program, comprising a computer code, when running on a computer, adapted for executing all steps of the method for synchronizing member benefits among multiple devices as previously mentioned.

Further, the computer program is embodied in a computer-readable medium.

The embodiment of the present disclosure provides a method for synchronizing member benefits among multiple devices, comprising:
receiving a synchronization request regarding a current device identity and a member account from a device, the current device identity being an identity of a current device, and the member account being logged at the current device;
using a result of synchronizing a member benefit and a corresponding member duration of the member account regarding a device identity to be synchronized with a member benefit and a corresponding member duration of the member account regarding the current device identity acquired through querying as the synchronization result, the device identity to be synchronized being different from the current device identity; and
returning the synchronization result to the device.

Further, the receiving the synchronization request regarding the current device identity and the member account from the device, the current device identity being the identity of the current device, and the member account being logged at the current device, specifically comprises:
receiving a collection query request comprising the current device identity and the member account, the current device identity being an identity of a current device, and the member account being logged at the current device;
acquiring at least one collection query result through querying, each collection query result being a member benefit and a corresponding member duration of the member account regarding a collectable device identity, the collectable device identity being different from the current device identity, and each collection query result corresponding to one single collectable device identity;
returning at least one collection query result to the device, the collection query result being displayed in the device; and
receiving a synchronization request comprising a selected device identity sent by the device in response to a selecting operation on the collection query result, the selected device identity being the collectable device identity corresponding to the collection query result selected by the selecting operation, and using the selected device identity comprised in the synchronization request received as the device identity to be synchronized.

Further, the synchronizing the member benefit and the corresponding member duration of the member account regarding the device identity to be synchronized with the member benefit and the corresponding member duration of the member account regarding the current device identity acquired through querying, specifically comprises:
using the member benefit and the corresponding member duration of the member account regarding the device identity to be synchronized as a member benefit to be synchronized and a corresponding member duration to be synchronized, and using the member benefit and the corresponding member duration of the member account regarding the current device identity as a current member benefit and a corresponding current member duration; and
adding the member duration to be synchronized corresponding to the member benefit to be synchronized identical to the current member benefit with a corresponding current member duration as a synchronized member duration, and updating the corresponding current member duration as the synchronized member duration.

Another embodiment of the present disclosure provides a computer program, comprising a computer code, when running on a computer, adapted for executing all steps of the method for synchronizing member benefits among multiple devices as previously mentioned.

Further, the computer program is embodied in a computer-readable medium.

Another embodiment of the present disclosure provides a device for synchronizing member benefits among multiple devices, comprising:
a current device acquisition module configured to acquire an identity of a device as a current device identity, and acquire a member account logged on the device;
a synchronization request sending module configured to send a synchronization request regarding the current device identity and the member account to the server; and
a synchronization result receiving module configured to receive a synchronization result returned by the server, the synchronization result being a result of synchronizing a member benefit and a corresponding member duration of the member account regarding a device identity to be synchronized with a member benefit and a corresponding member duration of the member account regarding the current device identity acquired by the server through querying, and the device identity to be synchronized being different from the current device identity.

Further, the synchronization request sending module specifically comprises:
a collection query request sending submodule configured to send a collection query request comprising the current device identity and the member account to the server;
a collection query result receiving submodule configured to acquire at least one collection query result returned by the server, the collection query result being a member benefit and a corresponding member duration of the member account regarding a collectable device identity acquired by the server through querying, the collectable device identity being different from the current device identity, and each collection query result corresponding to one single collectable device identity; and
a display submodule configured to display the collection query result, and send a synchronization request comprising a selected received to the server in response to a selecting operation on the collection query result, the selected device identity being the collectable device identity corresponding to the collection query result selected by the selecting operation, and the server being configured to use the selected device identity comprised in the synchronization request received as the device identity to be synchronized.

Another embodiment of the present disclosure provides a device for synchronizing member benefits among multiple devices, comprising: one or more processors, a memory, and one or more programs, wherein the one or more programs are stored in the memory and are configured to be executed by the one or more processors, the one or more programs comprise an instruction, and the instruction is configured to:
acquire an identity of a device as a current device identity, and acquire a member account logged on the device;
a synchronization request sending module configured to send a synchronization request regarding the current device identity and the member account to the server; and
a synchronization result receiving module configured to receive a synchronization result returned by the server, the synchronization result being a result of synchronizing a member benefit and a corresponding member duration of the member account regarding a device identity to be synchronized with a member benefit and a corresponding member duration of the member account regarding the current device identity acquired by the server through querying, and the device identity to be synchronized being different from the current device identity.

Further, the sending the synchronization request regarding the current device identity and the member account to the server specifically comprises:
sending a collection query request comprising the current device identity and the member account to the server;
acquiring at least one collection query result returned by the server, the collection query result being a member benefit and a corresponding member duration of the member account regarding a collectable device identity acquired by the server through querying, the collectable device identity being different from the current device identity, and each collection query result corresponding to one single collectable device identity; and
displaying the collection query result, and sending a synchronization request comprising a selected device identity to the server in response to a selecting operation on the collection query result, the selected device identity being the collectable device identity corresponding to the collection query result selected by the selecting operation, and the server being configured to use the selected device identity comprised in the synchronization request received as the device identity to be synchronized.

Another embodiment of the present disclosure provides a server for synchronizing member benefits among multiple devices, comprising:
a synchronization request receiving module configured to receive a synchronization request regarding a current device identity and a member account from a device, the current device identity being an identity of a current device, and the member account being logged at the current device;
a synchronization result acquisition module configured to use a result of synchronizing a member benefit and a corresponding member duration of the member account regarding a device identity to be synchronized with a member benefit and a corresponding member duration of the member account regarding the current device identity acquired through querying as the synchronization result, the device identity to be synchronized being different from the current device identity; and
a synchronization result sending module configured to return the synchronization result to the device.

Further, the synchronization request receiving module specifically comprises:
a collection query request receiving submodule configured to receive a collection query request comprising the current device identity and the member account, the current device identity being an identity of the current device, and the member account being logged at the current device;
a collection query result submodule configured to acquire at least one collection query result through querying, each the collection query result being a member benefit and a corresponding member duration of the member account regarding a collectable device identity, the collectable device identity being different from the current device identity, and each collection query result corresponding to one single collectable device identity;
a collection query result sending submodule configured to return at least one collection query result to the device, the collection query result being displayed in the device; and
a selection result receiving submodule configured to receive a synchronization request comprising a selected device identity sent by the device in response to a selecting operation on the collection query result, the selected device identity being the collectable device identity corresponding to the collection query result selected by the selecting operation, and use the selected device identity comprised in the synchronization request received as the device identity to be synchronized.

Further, the synchronizing the member benefit and the corresponding member duration of the member account regarding the device identity to be synchronized with the member benefit and the corresponding member duration of the member account regarding the current device identity acquired through querying, specifically comprises:
using the member benefit and the corresponding member duration of the member account regarding the device identity to be synchronized as a member benefit to be synchronized and a corresponding member duration to be synchronized, and using the member benefit and the corresponding member duration of the member account regarding the current device identity as a current member benefit and a corresponding current member duration; and
adding the member duration to be synchronized corresponding to the member benefit to be synchronized identical to the current member benefit with the corresponding current member duration as a synchronized member duration, and updating the corresponding current member duration as the synchronized member duration.

Another embodiment of the present disclosure provides a server for synchronizing member benefits among multiple devices, comprising: one or more processors, a memory, and one or more programs, wherein the one or more programs are stored in the memory and are configured to be executed by the one or more processors, the one or more programs comprise an instruction, and the instruction is configured to:
receive a synchronization request regarding a current device identity and a member account from a device, the current device identity being an identity of the current device, and the member account being logged at the current device;
use a result of synchronizing a member benefit and a corresponding member duration of the member account regarding a device identity to be synchronized with a member benefit and a corresponding member duration of the member account regarding the current device identity acquired through querying as the synchronization result, the device identity to be synchronized being different from the current device identity; and
return the synchronization result to the device.

Further, the receiving the synchronization request regarding the current device identity and the member account from the device, the current device identity being the identity of the current device, and the member account being logged at the current device, specifically comprises:
receiving a collection query request comprising the current device identity and the member account, the current device identity being an identity of the current device, and the member account being logged at the current device;
acquiring at least one collection query result through querying, each collection query result being a member benefit and a corresponding member duration of the member account regarding a collectable device identity, the collectable device identity being different from the current device identity, and each collection query result corresponding to one single collectable device identity;
returning at least one collection query result to the device, the collection query result being displayed in the device; and
receiving a synchronization request comprising a selected device identity sent by the device in response to a selecting operation on the collection query result, the selected device identity being the collectable device identity corresponding to the collection query result selected by the selecting operation, and using the selected device identity comprised in the synchronization request received as the device identity to be synchronized.

Still further, the synchronizing the member benefit and the corresponding member duration of the member account regarding the device identity to be synchronized with the member benefit and the corresponding member duration of the member account regarding the current device identity acquired through querying, specifically comprises:
using the member benefit and the corresponding member duration of the member account regarding the device identity to be synchronized as a member benefit to be synchronized and a corresponding member duration to be synchronized, and using the member benefit and the corresponding member duration of the member account regarding the current device identity as a current member benefit and a corresponding current member duration; and
adding the member duration to be synchronized corresponding to the member benefit to be synchronized identical to the current member benefit with the corresponding current member duration as a synchronized member duration, and updating the corresponding current member duration as the synchronized member duration.

The embodiment of the present disclosure provides a system for synchronizing member benefits among multiple devices, comprising the device and the server as previously mentioned.

According to the embodiments of the present disclosure, the member benefits and the corresponding durations of the same account regarding different devices are searched through the server, and then synchronized, so that a function of sharing the member benefits of the same account among multiple devices is achieved.

### BRIEF DESCRIPTION OF THE DRAWINGS

Figure 1 is a working flow chart of a method for synchronizing member benefits among multiple devices applied in a device provided by one embodiment of the present disclosure;
Figure 2 is a schematic diagram showing effects of displaying a plurality of collection query results in a device provided by one embodiment of the present disclosure;
Figure 3 is a working flow chart of a method for synchronizing member benefits among multiple devices applied in a server provided by one embodiment of the present disclosure;
Figure 4 is a structure model diagram of a device for synchronizing member benefits among multiple devices provided by one embodiment of the present disclosure;
Figure 5 is a structure block diagram of a device provided by one embodiment of the present disclosure;
Figure 6 is a structure model diagram of a server for synchronizing member benefits among multiple devices provided by one embodiment of the present disclosure;
Figure 7 is a structure block diagram of a server provided by one embodiment of the present disclosure;
Figure 8 is a structure model diagram of a system for synchronizing member benefits among multiple devices provided by one embodiment of the present disclosure; and
Figure 9 is a working flow chart of a method for synchronizing member benefits among multiple devices provided by another embodiment of the present disclosure.

### DETAILED DESCRIPTION

The present disclosure will be further described in details hereinafter with reference to the figures and specific embodiments.

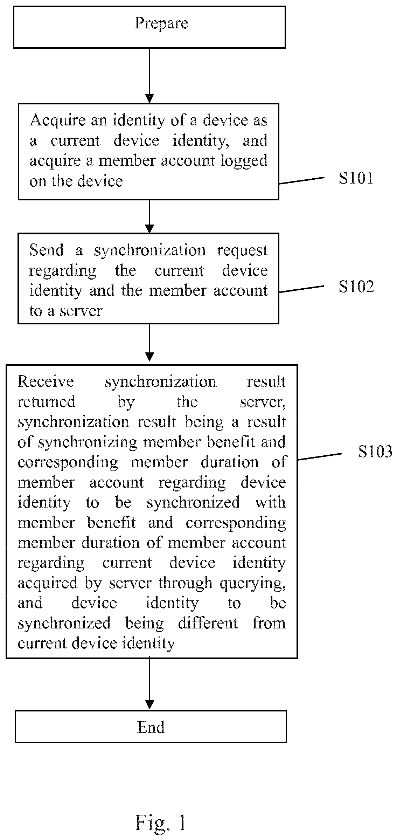

Figure 1 shows a working flow chart of a method for synchronizing member benefits among multiple devices provided by an embodiment of the present disclosure, comprising:
step S101, acquiring an identity of a device as a current device identity, and acquiring a member account logged on the device;
step S102, sending a synchronization request regarding the current device identity and the member account to a server; and
step S103, receiving a synchronization result returned by the server, the synchronization result being a result, acquired by the server through querying, of synchronizing a member benefit and a corresponding member duration of the member account regarding a device identity to be synchronized with a member benefit and a corresponding member duration of the member account regarding the current device identity, and the device identity to be synchronized being different from the current device identity.

The device identity acquired in step S101 may either be a media access control (Media Access Control, MAC) address (which is also called a physical address) of the device, or a name, an IP address of the device, or the like. The device is indicated through the current device identity. The synchronization request is sent in step S102, and the synchronization result is acquired in step S103, wherein the synchronization result is a result, acquired by the server through querying, of synchronizing a member benefit and a corresponding member duration of the same member account regarding other device with a member benefit and a corresponding member duration of the member account regarding the device indicated by the current device identity.

According to one embodiment, the current device identity represents a smartphone, and the device identity to be synchronized represents a smart TV, then the scenario of the embodiment is as follows:
a user purchases a smart TV firstly, and then uses a member account to activate and log in the smart TV, thus acquiring a member benefit and a corresponding member duration of the member account regarding the smart TV. To facilitate description, the member benefit and the corresponding member duration of the member account regarding the smart TV are defined as a high-definition member benefit and a high-definition member duration.

Then the user purchases a smartphone, and then uses the same member account to activate and log in the smartphone, thus acquiring a member benefit and a corresponding member duration of the member account regarding the smartphone. To facilitate description, the member benefit and the corresponding member duration of the member account regarding the smartphone are defined as a mobile phone member benefit and a mobile phone member duration.

When the smartphone is used for a synchronizing operation, the member account as well as the high-definition member benefit and the high-definition member duration may be acquired by a server through querying, such that the mobile phone member benefit and the mobile phone member duration of the smartphone are synchronized with the high definition member benefit and the high definition.

Similarly, when the smartphone is used for a synchronizing operation, the high-definition member benefit and the high-definition member duration of the smart TV may also be synchronized with the mobile phone member benefit and the mobile phone member duration.

According to one embodiment of the present disclosure, the member benefits and the corresponding durations of the same account regarding different devices are searched through the server, and then synchronized, so that a function of sharing the member benefits of the same account among multiple devices is achieved.

If the same member account has member benefits and corresponding member durations regarding a plurality of device identities, then any one device identity may be selected as the device identity to be synchronized in the server.

In one embodiment, the sending the synchronization request regarding the current device identity and the member account to the server specifically comprises:
sending a collection query request comprising the current device identity and the member account to the server;
acquiring at least one collection query result returned by the server, the collection query result being a member benefit and a corresponding member duration of the member account regarding a collectable device identity acquired by the server through querying, the collectable device identity being different from the current device identity, and each collection query result corresponding to one single collectable device identity; and
displaying the collection query result, and sending a synchronization request comprising a selected device identity to the server in response to a selecting operation for the collection query result, the selected device identity being the collectable device identity corresponding to the collection query result selected by the selecting operation, and the server being configured to use the selected device identity comprised in a received synchronization request as the device identity to be synchronized.

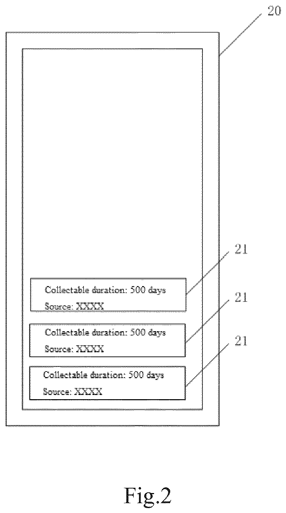

In the embodiment, after a plurality of collection query results are acquired, the collection query results 21 are displayed in the device, a display effect of which is shown in Figure 2. The user clicks one collection query result 21 in the device 20, thus selecting the collection query result, and synchronizing the collection query result with the member benefit and the member duration of the current device identity through sending the synchronization request to the server.

According to the embodiment, the user, on his own, selects the device to be synchronized, so that the user's independent selection requirement may be satisfied more flexibly.

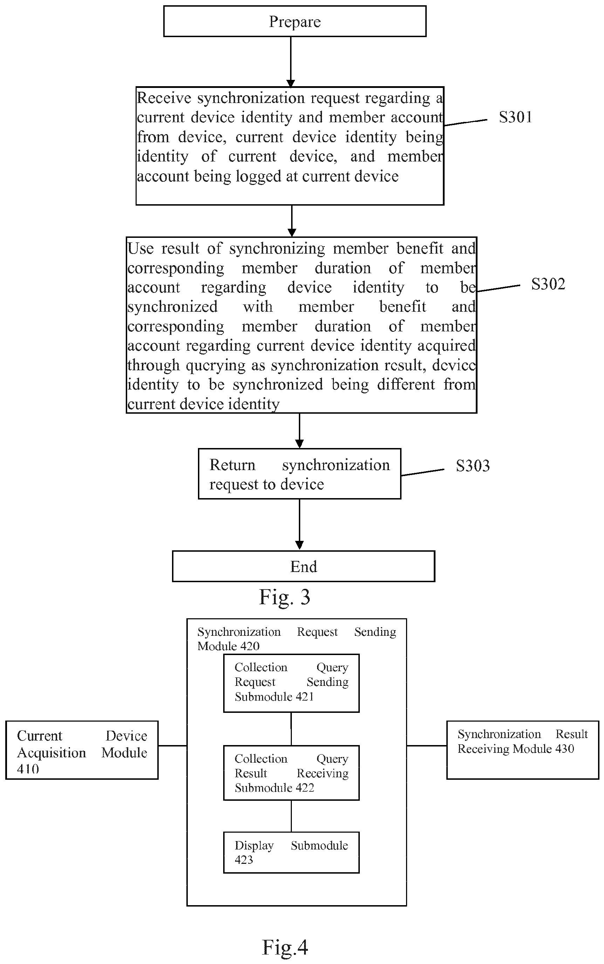

Figure 3 shows a working flow chart of a method for synchronizing member benefits among multiple devices provided by one embodiment of the present disclosure, comprising:
step S301, receiving a synchronization request regarding a current device identity and a member account from a device, the current device identity being an identity of the current device, and the member account being logged at the current device;
step S302, using a result of synchronizing a member benefit and a corresponding member duration of the member account regarding a device identity to be synchronized with a member benefit and a corresponding member duration of the member account regarding the current device identity as the synchronization result, the device identity to be synchronized being different from the current device identity; and
step S303, returning the synchronization result to the device.

The employment represents a working flow of the server, which performs synchronization treatment on a received synchronization request.

In one embodiment, the receiving the synchronization request regarding the current device identity and the member account from the current device, the current device identity being the identity of the current device, and the member account being logged at the current device, specifically comprises:
receiving a collection query request comprising the current device identity and the member account, the current device identity being an identity of the current device, and the member account being logged at the current device;
acquiring at least one collection query result through querying, each collection query result being a member benefit and a corresponding member duration of the member account regarding a collectable device identity, the collectable device identity being different from the current device identity, and each collection query result corresponding to one single collectable device identity;
returning at least one collection query result to the device, the collection query result being displayed in the device; and
receiving a synchronization request comprising a selected device identity sent by the device in response to a selecting operation on the collection query result, the selected device identity being the collectable device identity corresponding to the collection query result selected by the selecting operation, and using the selected device identity comprised in the received synchronization request as the device identity to be synchronized.

In one embodiment, the synchronizing the member benefit and the corresponding member duration of the member account regarding the device identity to be synchronized with the member benefit and the corresponding member duration of the member account regarding the current device identity acquired through querying, specifically comprises:
using the member benefit and the corresponding member duration of the member account regarding the device identity to be synchronized as a member benefit to be synchronized and a corresponding member duration to be synchronized, and using the member benefit and the corresponding member duration of the member account regarding the current device identity as a current member benefit and a corresponding current member duration; and
adding the corresponding member duration to be synchronized of the member benefit to be synchronized identical to the current member benefit with the corresponding current member duration as a synchronized member duration, and updating the corresponding current member duration as the synchronized member duration.

The synchronizing the member benefit and the corresponding member duration of the member account regarding the device identity to be synchronized with the member benefit and the corresponding member duration of the member account regarding the current device identity acquired through querying may be to cover a shorter member duration by a longer member duration. But the user experience of this method is worse. A specific synchronization operation in the embodiment is to overlap member durations corresponding to the same member benefit with each other.

According to one embodiment, the current device identity represents a smartphone, and the device identity to be synchronized represents a smart TV, then the scenario of the embodiment is as follows:
a user purchases a smart TV firstly, and then uses a member account to activate and log in the smart TV, thus acquiring a video member benefit and a corresponding member duration of the member account regarding the smart TV To facilitate description, the video member benefit and the corresponding member duration of the member account regarding the smart TV are defined as a high-definition video member benefit and a high-definition video member duration, wherein the high definition video member duration is 500 hours.

Then the user purchases a smartphone, and then uses the same member account to activate and log in the smartphone, thus acquiring a video member benefit and a corresponding member duration of the member account regarding the smartphone. To facilitate description, the video member benefit and the corresponding member duration of the member account regarding the smartphone are defined as a mobile phone video member benefit and a mobile phone video member duration, wherein the mobile phone video member duration is 500 hours.

When the smartphone is used for a synchronizing operation, the member account as well as the high-definition video member benefit and the high-definition video member duration may be acquired by a server through querying. Because the high-definition video member benefit is consistent with the mobile phone video member benefit, the high definition video member duration may be overlapped to the mobile phone video member duration, so that the mobile phone video member duration is increased from 500 hours to 1000 hours.

Similarly, when the smartphone is used for a synchronizing operation, the high-definition video member duration of the smart TV may also be increased to 1000 hours.

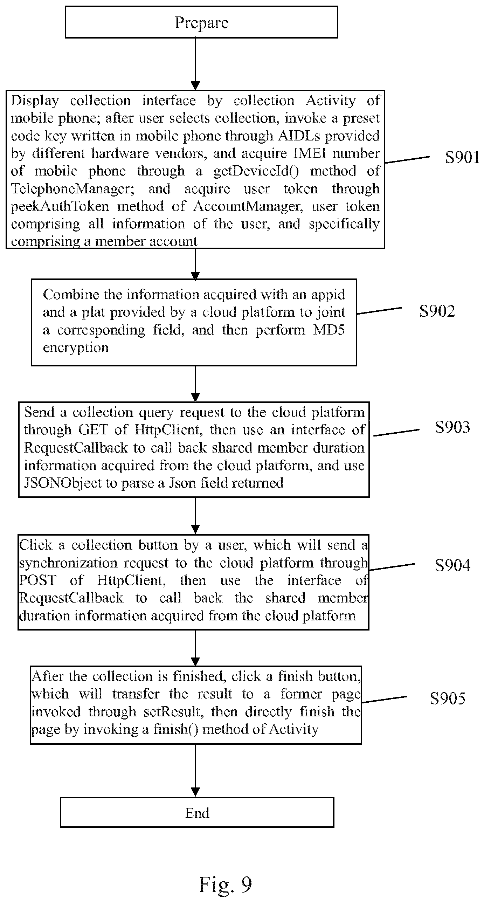

Figure 9 shows a working flow chart of a method for synchronizing member benefits among multiple devices provided by another embodiment of the present disclosure, comprising the following steps.

In step S901, a collection Activity of a mobile phone displays a collection interface; after a user selects collection, a preset code key written in the mobile phone is retrieved through AIDLs provided by different hardware vendors, and an IMEI number of the mobile phone is acquired through a getDeviceId() method of TelephoneManager. A user token is acquired through a peekAuthToken method of AccountManager. The user token comprises all information of the user, which specifically comprises a member account.

In step S902, the acquired information is combined with an appid and a plat provided by a cloud platform to be jointed as a corresponding field, and then MD5 encryption is performed. An encryption manner is as follows: sign = md5("appid="+"value" + "&devid="+"value" + "&key=" + "value" + "&plat=" + "value" + "&"+ signature key).

In step S903, a collection query request is sent to the cloud platform through GET of HttpClient, then an interface of RequestCallback is used to call back shared member duration information acquired from the cloud platform, and a Json field returned is parsed using JSONObject; if an array length of the information acquired is 1, then it indicates only one presented member duration; then mac, title, from and id fields of the data are parsed, and the parsed data are displayed; then a user may click a collection button to collect each single member presentation duration; if a plurality of information arrays are acquired, then each piece of data is saved using JSONArray, and all the items of the data are displayed using ListView; each ListView Item will have the mac, title, from and id fields, and the data is transmitted to GetFullScreenVipProtocalActivity, then the corresponding information will be displayed in the Activity. Then, the collection button may be clicked to collect each single member presentation duration.

In step S904, the user clicks the collection button, which will send a synchronization request to the cloud platform through POST of HttpClient, then the interface of RequestCallback is used to call back the shared member duration information acquired from the cloud platform, a Json field returned is parsed using JSONObject, and a done field is parsed; if the length of the field is 1, then it indicates that the collection is successful; and if the length of the field is 0, then it indicates that the collection is failed, and then the title and info fields returned are parsed, and a collection result is displayed.

In step S905, after the collection is finished, by clicking a finish button, the result will be transferred back to a former page through setResult, then the page is directly ended by invoking a finish() method of Activity; after the former invoked page receives a returned result through onActivityResult, it will finish directly to return back to an account information page to refresh the information display and member duration if the collection is successful; and it will stay at the current page if the collection is failed.

Hereinafter, one embodiment of the present disclosure provides a collection interface strategy to other app

Preferably, other app may transmit a member account and an app name needed to the forementioned collection Activity through Intent, wherein the Activity will make a judgment according to different from parameters (i.e., app name), and display different interfaces and prompts after successful collection. An invoking method thereof is as follows:

```
     intent.putExtra("report_id","");
     intent.putExtra("from", /*app name*/);
     intent.setClass(this, GetFullScreenVipViaTVActivity.class);
     startActivityForResult(intent);
```

The collection result will be provided in two different ways:
1. directly return the result to an invoker through setResult; and
2. sending a result broadcast, wherein the invoker after receiving the broadcast, will make a judgment according to a field returned by the broadcast.

Figure 4 is a structure model diagram of a device for synchronizing member benefits among multiple devices provided by one embodiment of the present disclosure, comprising:
a current device acquisition module 410 configured to acquire an identity of a device as a current device identity, and acquire a member account logged on the device;
a synchronization request sending module 420 configured to send a synchronization request regarding the current device identity and the member account to a server; and
a synchronization result receiving module 430 configured to receive a synchronization result returned by the server, the synchronization result being a result of synchronizing a member benefit and a corresponding member duration of the member account regarding a device identity to be synchronized with a member benefit and a corresponding member duration of the member account regarding the current device identity acquired by the server through querying, and the device identity to be synchronized being different from the current device identity.

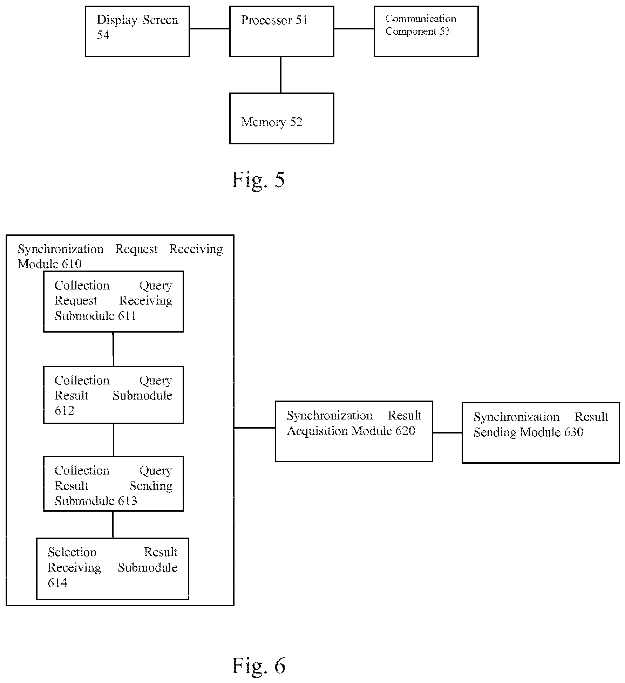

Figure 5 is a structure block diagram of a device provided by one embodiment of the present disclosure. The device is preferably a mobile phone, a smartphone, or the like, which mainly comprises: a processor 51, a memory 52, a communication component 53 and a display screen 54, or the like.

Wherein, the memory 52 stores a specific code of the forgoing method that is specifically executed by the processor 51, and the synchronization request is sent to the server and the synchronization result is received through the communication component 53, and the synchronization result is displayed on the display screen 54.

Moreover, a logic instruction in the memory 52 above, if being implemented through a software function unit and sold or used as an independent product, may be stored in a computer-readable storage medium. Based on such understanding, the technical solution of the present disclosure essentially, or the part contributing to the prior art, or the part of the technical solution may be implemented in the form of a software product. The computer software product is stored in a storage medium, and includes several instructions for instructing a mobile terminal (which may be a personal computer, a server, or a network device so on) to execute the all or a part of steps of the method according to each embodiment of the present disclosure. While the forementioned storage medium comprises: any medium that is capable of storing program codes, such as a USB disk, a mobile hard disk drive, a read-only memory (ROM, Read-Only Memory), a random access memory (RAM, Random Access Memory), a magnetic disk, or an optical disk.

The device embodiments described above are only exemplary, wherein the units illustrated as separation parts may either be or not physically separated, and the parts displayed by units may either be or not physical units, i.e., the parts may either be located in the same plate, or be distributed on a plurality of network units. A part or all of the modules may be selected according to an actual requirement to achieve the objectives of the solutions in the embodiments of the present disclosure. Those having ordinary skills in the art may understand and implement without going through creative work.

Through the above description of the implementation manners, those skilled in the art may clearly understand that each implementation manner may be achieved in a manner of combining software and a necessary common hardware platform, and certainly may also be achieved by hardware. Based on such understanding, the foregoing technical solutions essentially, or the part contributing to the prior art may be implemented in the form of a software product. The computer software product may be stored in a storage medium such as a ROM/RAM, a diskette, an optical disk or the like, and includes several instructions for instructing a computer device (which may be a personal computer, a server, or a network device so on) to execute the method according to each embodiment or some parts of the embodiments.

In one embodiment, the synchronization request sending module 420 specifically comprises:
a collection query request sending submodule 421 configured to send a collection query request comprising the current device identity and the member account to the server;
a collection query result receiving submodule 422 configured to acquire at least one collection query result returned by the server, the collection query result being a member benefit and a corresponding member duration of the member account regarding a collectable device identity acquired by the server through querying, the collectable device identity being different from the current device identity, and each collection query result corresponding to one single collectable device identity; and
a display submodule 423 configured to display the collection query result, and send a synchronization request comprising a selected device identity received to the server in response to a selecting operation on the collection query result, the selected device identity being the collectable device identity corresponding to the collection query result selected by the selecting operation, and the server being configured to use the selected device identity comprised in the synchronization request received as the device identity to be synchronized.

The embodiment of the present disclosure provides a device for synchronizing member benefits among multiple devices, comprising: one or more processors, a memory, and one or more programs, wherein the one or more programs are stored in the memory and are configured to be executed by the one or more processors, the one or more programs comprise an instruction which is configured to acquire an identity of a device as a current device identity, and acquire a member account logged on the device;
a synchronization request sending module configured to send a synchronization request regarding the current device identity and the member account to the server; and
a synchronization result receiving module configured to receive a synchronization result returned by the server, the synchronization result being a result of synchronizing a member benefit and a corresponding member duration of the member account regarding a device identity to be synchronized with a member benefit and a corresponding member duration of the member account regarding the current device identity acquired by the server through querying, and the device identity to be synchronized being different from the current device identity.

In one embodiment, the sending the synchronization request regarding the current device identity and the member account to the server specifically comprises:
sending a collection query request comprising the current device identity and the member account to the server;
acquiring at least one collection query result returned by the server, the collection query result being a member benefit and a corresponding member duration of the member account regarding a collectable device identity acquired by the server through querying, the collectable device identity being different from the current device identity, and each collection query result being corresponding to one single collectable device identity; and
displaying the collection query result, and sending a synchronization request comprising a selected received to the server in response to a selecting operation on the collection query result, the selected device identity being the collectable device identity corresponding to the collection query result selected by the selecting operation, and the server being configured to use the selected device identity comprised in the synchronization request received as the device identity to be synchronized.

Figure 6 is a structure model diagram of a device for synchronizing member benefits among multiple devices provided by one embodiment of the present disclosure, comprising:
a synchronization request receiving module 610 configured to receive a synchronization request regarding a current device identity and a member account from a device, the current device identity being an identity of the current device, and the member account being logged at the current device;
a synchronization result acquisition module 620 configured to use a result of synchronizing a member benefit and a corresponding member duration of the member account regarding a device identity to be synchronized with a member benefit and a corresponding member duration of the member account regarding the current device identity acquired through querying as the synchronization result, the device identity to be synchronized being different from the current device identity; and
a synchronization result sending module 630 configured to return the synchronization result to the device.

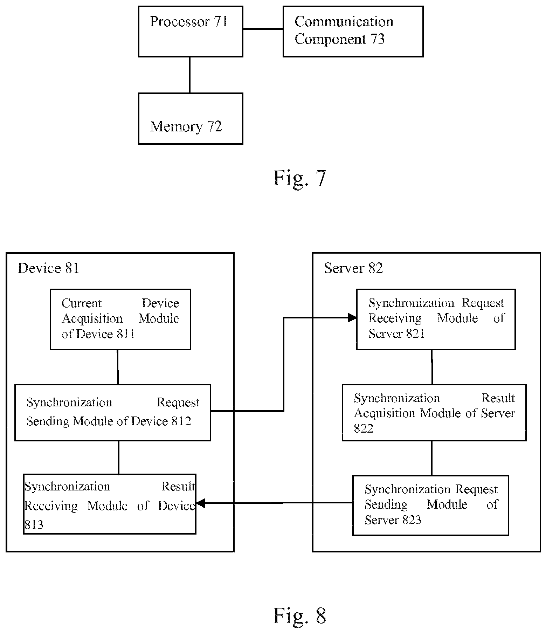

Figure 7 is a structure block diagram of a server provided by one embodiment of the present disclosure. The server may either be a computer, or a cluster composed of multiple computers, which mainly comprises: a processor 71, a memory 72 and a communication component 73 and the like.

Wherein, the memory 72 stores with a specific code of the forgoing method that is specifically executed by the processor 71, the synchronization request sent by the device is received through the communication component 73, and the specific synchronization result is queried and synchronously acquired from the memory 72 by the processor 71, and then the synchronization result is sent to the device through the communication component 73.

Moreover, a logic instruction in the memory 72 above, if being implemented through a software function unit and sold or used as an independent product, may be stored in a computer-readable storage medium. Based on such understanding, the technical solution of the present disclosure essentially, or the part contributing to the prior art, or the part of the technical solution may be implemented in the form of a software product. The computer software product is stored in a storage medium, and includes several instructions for instructing a mobile terminal (which may be a personal computer, a server, or a network device so on) to execute the all or a part of steps of the method according to each embodiment of the present disclosure. While the forementioned storage medium comprises: any medium that is capable of storing program codes, such as a USB disk, a mobile hard disk drive, a read-only memory (ROM, Read-Only Memory), a random access memory (RAM, Random Access Memory), a magnetic disk, or an optical disk.

The device embodiments described above are only exemplary, wherein the units illustrated as separation parts may either be or not physically separated, and the parts displayed by units may either be or not physical units, i.e., the parts may either be located in the same plate, or be distributed on a plurality of network units. A part or all of the modules may be selected according to an actual requirement to achieve the objectives of the solutions in the embodiments of the present disclosure. Those having ordinary skills in the art may understand and implement without going through creative work.

Through the above description of the implementation manners, those skilled in the art may clearly understand that each implementation manner may be achieved in a manner of combining software and a necessary common hardware platform, and certainly may also be achieved by hardware. Based on such understanding, the foregoing technical solutions essentially, or the part contributing to the prior art may be implemented in the form of a software product. The computer software product may be stored in a storage medium such as a ROM/RAM, a diskette, an optical disk or the like, and includes several instructions for instructing a computer device (which may be a personal computer, a server, or a network device so on) to execute the method according to each embodiment or some parts of the embodiments.

In one embodiment, the synchronization request receiving module 610 specifically comprises:
a collection query request receiving submodule 611 configured to receive a collection query request comprising the current device identity and the member account, the current device identity being an identity of the current device, and the member account being logged at the current device;
a collection query result submodule 612 configured to acquire at least one collection query result through querying, each collection query result being a member benefit and a corresponding member duration of the member account regarding a collectable device identity, the collectable device identity being different from the current device identity, and each collection query result being corresponding to one single collectable device identity;
a collection query result sending submodule 613 configured to return at least one collection query result to the device, the collection query result being displayed in the device; and
a selection result receiving submodule 614 configured to receive a synchronization request comprising a selected device identity sent by the device in response to a selecting operation on the collection query result, the selected device identity being the collectable device identity corresponding to the collection query result selected by the selecting operation, and use the selected device identity comprised in the synchronization request received as the device identity to be synchronized.

In one embodiment, the synchronizing the member benefit and the corresponding member duration of the member account regarding the device identity to be synchronized with the member benefit and the corresponding member duration of the member account regarding the current device identity acquired through querying, specifically comprises:
using the member benefit and the corresponding member duration of the member account regarding the device identity to be synchronized as a member benefit to be synchronized and a corresponding member duration to be synchronized, and using the member benefit and the corresponding member duration of the member account regarding the current device identity as a current member benefit and a corresponding current member duration; and
adding the corresponding member duration to be synchronized of the member benefit to be synchronized identical to the current member benefit with the corresponding current member duration as a synchronized member duration, and updating the corresponding current member duration as the synchronized member duration.

The embodiment of the present disclosure provides a server for synchronizing member benefits among multiple devices, comprising: one or more processors, a memory, and one or more programs, wherein the one or more programs are stored in the memory and are configured to be executed by the one or more processors, the one or more programs comprise an instruction, and the instruction is configured to:
receive a synchronization request regarding a current device identity and a member account from a device, the current device identity being an identity of the current device, and the member account being logged at the current device;
use a result of synchronizing a member benefit and a corresponding member duration of the member account regarding a device identity to be synchronized with a member benefit and a corresponding member duration of the member account regarding the current device identity acquired through querying as the synchronization result, the device identity to be synchronized being different from the current device identity; and
return the synchronization result to the device.

In one embodiment, the receiving the synchronization request regarding the current device identity and the member account from the device, the current device identity being the identity of the current device, and the member account being logged at the current device, specifically comprises:
receiving a collection query request comprising the current device identity and the member account, the current device identity being an identity of the current device, and the member account being logged at the current device;
acquiring at least one collection query result through querying, each collection query result being a member benefit and a corresponding member duration of the member account regarding a collectable device identity, the collectable device identity being different from the current device identity, and each collection query result corresponding to one single collectable device identity;
returning at least one collection query result to the device, the collection query result being displayed in the device; and
receiving a synchronization request comprising a selected device identity sent by the device in response to a selecting operation on the collection query result, the selected device identity being the collectable device identity corresponding to the collection query result selected by the selecting operation, and using the selected device identity comprised in the synchronization request received as the device identity to be synchronized.

In one embodiment, the synchronizing the member benefit and the corresponding member duration of the member account regarding the device identity to be synchronized with the member benefit and the corresponding member duration of the member account regarding the current device identity acquired through querying, specifically comprises:
using the member benefit and the corresponding member duration of the member account regarding the device identity to be synchronized as a member benefit to be synchronized and a corresponding member duration to be synchronized, and using the member benefit and the corresponding member duration of the member account regarding the current device identity as a current member benefit and a corresponding current member duration; and
adding the corresponding member duration to be synchronized of the member benefit to be synchronized identical to the current member benefit with the corresponding current member duration as a synchronized member duration, and updating the corresponding current member duration into the synchronized member duration.

Figure 8 is a structure model diagram of a system for synchronizing member benefits among multiple devices provided by one embodiment of the present disclosure, comprising a device 81 and a server 82 as previously mentioned.

In particular, the device 81 comprises:
a current device acquisition module 811 of the device configured to acquire an identity of the device as a current device identity, and acquire a member account logged on the device;
a synchronization request sending module 812 of the device configured to send a synchronization request regarding the current device identity and the member account to a server; and
a synchronization result receiving module 813 of the device configured to: receive a synchronization result returned by the server, the synchronization result being a result of synchronizing a member benefit and a corresponding member duration of the member account regarding a device identity to be synchronized with a member benefit and a corresponding member duration of the member account regarding the current device identity acquired by the server through querying, and the device identity to be synchronized being different from the current device identity.

The server 82 comprises:
a synchronization request receiving module 821 of the server configured to: receive a synchronization request regarding a current device identity and a member account from a device, the current device identity being an identity of the current device, and the member account being logged at the current device;
a synchronization result acquisition module 822 of the server configured to: use a result of synchronizing a member benefit and a corresponding member duration of the member account regarding a device identity to be synchronized with a member benefit and a corresponding member duration of the member account regarding the current device identity acquired through querying as the synchronization result, the device identity to be synchronized being different from the current device identity; and
a synchronization result sending module 823 of the server configured to return the synchronization result to the device.

The above embodiments only express several embodiments of the present disclosure, which are described more specifically and in details, but cannot be thus understood as a limitation to the patent scope of the present disclosure. It should be noted that those having ordinary skills in the art of the disclosure may also make many modifications and improvements without departing from the conceive of the disclosure which shall all fall within the protection scope of the disclosure. Therefore, the patent protection scope of the present disclosure shall be subjected to the appended claims.

## Claims

1. A method for synchronizing member benefits among multiple devices, comprising:
acquiring an identity of a device as a current device identity, and acquiring a member account logged on the device;
sending a synchronization request regarding the current device identity and the member account to a server; and
receiving a synchronization result returned by the server, the synchronization result being a result of synchronizing a member benefit and a corresponding member duration of the member account regarding a device identity to be synchronized with a member benefit and a corresponding member duration of the member account regarding the current device identity acquired by the server through querying, and the device identity to be synchronized being different from the current device identity.

2. The method for synchronizing member benefits among multiple devices according to claim 1, wherein the sending the synchronization request regarding the current device identity and the member account to the server specifically comprises:
sending a collection query request comprising the current device identity and the member account to the server;
acquiring at least one collection query result returned by the server, the collection query result being a member benefit and a corresponding member duration of the member account regarding a collectable device identity acquired by the server through querying, the collectable device identity being different from the current device identity, and each collection query result corresponding to one single collectable device identity; and
displaying the collection query result, and sending a synchronization request comprising a selected device identity to the server in response to a selecting operation on the collection query result, the selected device identity being the collectable device identity corresponding to the collection query result selected by the selecting operation, and the server being configured to use the selected device identity comprised in the synchronization request received as the device identity to be synchronized.

3. A computer program, comprising a computer code, when running on a computer, adapted for executing all steps of the method for synchronizing member benefits among multiple devices according to claim 1 or 2.

4. The computer program according to claim 3, wherein the computer program is embodied in a computer-readable medium.

5. A method for synchronizing member benefits among multiple devices, comprising:
receiving a synchronization request regarding a current device identity and a member account from a device, the current device identity being an identity of a current device, and the member account being logged at the current device;
using a result of synchronizing a member benefit and a corresponding member duration of the member account regarding a device identity to be synchronized with a member benefit and a corresponding member duration of the member account regarding the current device identity acquired through querying as the synchronization result, the device identity to be synchronized being different from the current device identity; and
returning the synchronization result to the device.

6. The method for synchronizing member benefits among multiple devices according to claim 5, wherein the receiving the synchronization request regarding the current device identity and the member account from the device, the current device identity being the identity of the current device, and the member account being logged at the current device, comprises:
receiving a collection query request comprising the current device identity and the member account, the current device identity being an identity of a current device, and the member account being logged at the current device;
acquiring at least one collection query result through querying, each collection query result being a member benefit and a corresponding member duration of the member account regarding a collectable device identity, the collectable device identity being different from the current device identity, and each collection query result corresponding to one single collectable device identity;
returning at least one collection query result to the device, the collection query result being displayed in the device; and
receiving a synchronization request comprising a selected device identity sent by the device in response to a selecting operation on the collection query result, the selected device identity being the collectable device identity corresponding to the collection query result selected by the selecting operation, and using the selected device identity comprised in the synchronization request received as the device identity to be synchronized.

7. The method for synchronizing member benefits among multiple devices according to claim 5 or 6, wherein the synchronizing the member benefit and the corresponding member duration of the member account regarding the device identity to be synchronized with the member benefit and the corresponding member duration of the member account regarding the current device identity acquired through querying, comprises:
using the member benefit and the corresponding member duration of the member account regarding the device identity to be synchronized as a member benefit to be synchronized and a corresponding member duration to be synchronized, and using the member benefit and the corresponding member duration of the member account regarding the current device identity as a current member benefit and a corresponding current member duration; and
adding the member duration to be synchronized corresponding to the member benefit to be synchronized identical to the current member benefit with a corresponding current member duration as a synchronized member duration, and updating the corresponding current member duration as the synchronized member duration.

8. A computer program, comprising a computer code, when running on a computer, adapted for executing all steps of the method for synchronizing member benefits among multiple devices according to any one of claims 5 to 7.

9. The computer program according to claim 8, wherein the computer program is embodied in a computer-readable medium.

10. A device for synchronizing member benefits among multiple devices, comprising:
a current device acquisition module configured to acquire an identity of a device as a current device identity, and acquire a member account logged on the device;
a synchronization request sending module configured to send a synchronization request regarding the current device identity and the member account to a server; and
a synchronization result receiving module configured to receive a synchronization result returned by the server, the synchronization result being a result of synchronizing a member benefit and a corresponding member duration of the member account regarding a device identity to be synchronized with a member benefit and a corresponding member duration of the member account regarding the current device identity acquired by the server through querying, and the device identity to be synchronized being different from the current device identity.

11. The device for synchronizing member benefits among multiple devices according to claim 10, wherein the synchronization request sending module comprises:
a collection query request sending submodule configured to send a collection query request comprising the current device identity and the member account to the server;
a collection query result receiving submodule configured to acquire at least one collection query result returned by the server, the collection query result being a member benefit and a corresponding member duration of the member account regarding a collectable device identity acquired by the server through querying, the collectable device identity being different from the current device identity, and each collection query result corresponding to one single collectable device identity; and
a display submodule configured to display the collection query result, and send a synchronization request comprising a selected received to the server in response to a selecting operation on the collection query result, the selected device identity being the collectable device identity corresponding to the collection query result selected by the selecting operation, and the server being configured to use the selected device identity comprised in the synchronization request received as the device identity to be synchronized.

12. A device for synchronizing member benefits among multiple devices, comprising: one or more processors, a memory, and one or more programs, wherein the one or more programs are stored in the memory and are configured to be executed by the one or more processors, the one or more programs comprise an instruction, and the instruction is configured to:
acquire an identity of a device as a current device identity, and acquire a member account logged on the device;
a synchronization request sending module configured to send a synchronization request regarding the current device identity and the member account to a server; and
a synchronization result receiving module configured to receive a synchronization result returned by the server, the synchronization result being a result of synchronizing a member benefit and a corresponding member duration of the member account regarding a device identity to be synchronized with a member benefit and a corresponding member duration of the member account regarding the current device identity acquired by the server through querying, and the device identity to be synchronized being different from the current device identity.

13. The device for synchronizing member benefits among multiple devices according to claim 12, wherein the sending the synchronization request regarding the current device identity and the member account to the server comprises:
sending a collection query request comprising the current device identity and the member account to the server;
acquiring at least one collection query result returned by the server, the collection query result being a member benefit and a corresponding member duration of the member account regarding a collectable device identity acquired by the server through querying, the collectable device identity being different from the current device identity, and each collection query result corresponding to one single collectable device identity; and
displaying the collection query result, and sending a synchronization request comprising a selected device identity to the server in response to a selecting operation on the collection query result, the selected device identity being the collectable device identity corresponding to the collection query result selected by the selecting operation, and the server being configured to use the selected device identity comprised in the synchronization request received as the device identity to be synchronized.

14. A server for synchronizing member benefits among multiple devices, comprising:
a synchronization request receiving module configured to receive a synchronization request regarding a current device identity and a member account from a device, the current device identity being an identity of a current device, and the member account being logged at the current device;
a synchronization result acquisition module configured to use a result of synchronizing a member benefit and a corresponding member duration of the member account regarding a device identity to be synchronized with a member benefit and a corresponding member duration of the member account regarding the current device identity acquired through querying as the synchronization result, the device identity to be synchronized being different from the current device identity; and
a synchronization result sending module configured to return the synchronization result to the device.

15. The server for synchronizing member benefits among multiple devices according to claim 14, wherein the synchronization request receiving module comprises:
a collection query request receiving submodule configured to receive a collection query request comprising the current device identity and the member account, the current device identity being an identity of the current device, and the member account being logged at the current device;
a collection query result submodule configured to acquire at least one collection query result through querying, each collection query result being a member benefit and a corresponding member duration of the member account regarding a collectable device identity, the collectable device identity being different from the current device identity, and each collection query result corresponding to one single collectable device identity;
a collection query result sending submodule configured to return at least one collection query result to the device, the collection query result being displayed in the device; and
a selection result receiving submodule configured to receive a synchronization request comprising a selected device identity sent by the device in response to a selecting operation on the collection query result, the selected device identity being the collectable device identity corresponding to the collection query result selected by the selecting operation, and use the selected device identity comprised in the synchronization request received as the device identity to be synchronized.

16. The server for synchronizing member benefits among multiple devices according to claim 14 or 15, wherein the synchronizing the member benefit and the corresponding member duration of the member account regarding the device identity to be synchronized with the member benefit and the corresponding member duration of the member account regarding the current device identity acquired through querying, comprises:
using the member benefit and the corresponding member duration of the member account regarding the device identity to be synchronized as a member benefit to be synchronized and a corresponding member duration to be synchronized, and using the member benefit and the corresponding member duration of the member account regarding the current device identity as a current member benefit and a corresponding current member duration; and
adding the member duration to be synchronized corresponding to the member benefit to be synchronized identical to the current member benefit with the corresponding current member duration as a synchronized member duration, and updating the corresponding current member duration as the synchronized member duration.

17. A server for synchronizing member benefits among multiple devices, comprising: one or more processors, a memory, and one or more programs, wherein the one or more programs are stored in the memory and are configured to be executed by the one or more processors, the one or more programs comprise an instruction, and the instruction is configured to:
receive a synchronization request regarding a current device identity and a member account from a device, the current device identity being an identity of a current device, and the member account being logged at the current device;
use a result of synchronizing a member benefit and a corresponding member duration of the member account regarding a device identity to be synchronized with a member benefit and a corresponding member duration of the member account regarding the current device identity acquired through querying as the synchronization result, the device identity to be synchronized being different from the current device identity; and
return the synchronization result to the device.

18. The server for synchronizing member benefits among multiple devices according to claim 17, wherein the receiving the synchronization request regarding the current device identity and the member account from the device, the current device identity being the identity of the current device, and the member account being logged at the current device, comprises:
receiving a collection query request comprising the current device identity and the member account, the current device identity being an identity of the current device, and the member account being logged at the current device;
acquiring at least one collection query result through querying, each collection query result being a member benefit and a corresponding member duration of the member account regarding a collectable device identity, the collectable device identity being different from the current device identity, and each collection query result corresponding to one single collectable device identity; and
returning at least one collection query result to the device, the collection query result being displayed in the device; and
receiving a synchronization request comprising a selected device identity sent by the device in response to a selecting operation on the collection query result, the selected device identity being the collectable device identity corresponding to the collection query result selected by the selecting operation, and using the selected device identity comprised in the synchronization request received as the device identity to be synchronized.

19. The server for synchronizing member benefits among multiple devices according to claim 17 or 18, wherein the synchronizing the member benefit and the corresponding member duration of the member account regarding the device identity to be synchronized with the member benefit and the corresponding member duration of the member account regarding the current device identity acquired through querying, comprises:
using the member benefit and the corresponding member duration of the member account regarding the device identity to be synchronized as a member benefit to be synchronized and a corresponding member duration to be synchronized, and using the member benefit and the corresponding member duration of the member account regarding the current device identity as a current member benefit and a corresponding current member duration; and
adding the member duration to be synchronized corresponding to the member benefit to be synchronized identical to the current member benefit with the corresponding current member duration as a synchronized member duration, and updating the corresponding current member duration as the synchronized member duration.

20. A system for synchronizing member benefits among multiple devices, comprising the device according to claim 10 or 11 and the server according to any one of claims 14 to 16.
